(19) Europäisches Patentamt
European Patent Office
Office européen des brevets

(11) **EP 4 769 496 A1**

(12) **EUROPEAN PATENT APPLICATION**

(43) Date of publication:
**01.07.2026 Bulletin 2026/27**

(51) International Patent Classification (IPC):
*H01M 4/04* (2006.01)   *C01B 32/05* (2017.01)
*H01M 4/133* (2010.01)   *H01M 4/1393* (2010.01)
*H01M 4/36* (2006.01)   *H01M 4/587* (2010.01)
*H01M 10/054* (2010.01)

(21) Application number: **25226337.1**

(22) Date of filing: **22.12.2025**

(52) Cooperative Patent Classification (CPC):
**H01M 10/054; C01B 32/05; H01M 4/0471;
H01M 4/133; H01M 4/1393; H01M 4/364;
H01M 4/587;** Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **31.12.2024 CN 202411998871**

(71) Applicant: **Shenzhen BTR New Energy
Technology Research
Institute Co., Ltd.
Shenzhen, Guangdong 518158 (CN)**

(72) Inventors:
• **CHENG, Gang**
 **Shenzen, Guangdong Province, 518158 (CN)**
• **WANG, Shuo**
 **Shenzen, Guangdong Province, 518158 (CN)**
• **LI, Zikun**
 **Shenzen, Guangdong Province, 518158 (CN)**
• **HUANG, Youyuan**
 **Shenzen, Guangdong Province, 518158 (CN)**

(74) Representative: **Vossius & Partner
Patentanwälte Rechtsanwälte mbB
Siebertstraße 3
81675 München (DE)**

(54) **ELECTRODE MATERIAL, PREPARATION METHOD THEREOF, SECONDARY BATTERY AND ELECTRODE**

(57) The present invention discloses an electrode material, a preparation method thereof, a secondary battery, and an electrode, the electrode material includes a carbon-containing powder; a conductivity of the carbon-containing powder ranges from 36 S/cm to 41 S/cm; a mass percentage of nitrogen in the carbon-containing powder ranges from 0.2 wt% to 0.9 wt%; and a closed pore volume of the carbon-containing powder ranges from 0.03 cm$^3$/g to 0.07 cm$^3$/g.

| | |
|---|---|
| modifying a first carbon source to obtain a modified carbon source | S101 |
| mixing the modified carbon source with a second carbon source and then performing pretreatment to obtain a first precursor | S102 |
| oxidizing the first precursor to obtain a second precursor | S103 |
| sintering the second precursor to obtain the carbon-containing powder | S104 |

**FIG. 1**

EP 4 769 496 A1

**Description**

TECHNICAL FIELD

The present disclosure relates to the field of secondary battery technology, and in particular to an electrode material and a preparation method thereof, a secondary battery and an electrode.

BACKGROUND

Compared with lithium-ion batteries, sodium-ion batteries exhibit characteristics such as high safety, low temperature resistance and fast charging, etc., and are considered as optimal complementary or alternative power sources for lithium-ion batteries, which have very wide application prospects in the fields of two-wheeled vehicles, energy storage, start-stop power sources, etc. Hard carbon materials are considered to be the most commercially promising electrode materials for sodium-ion batteries due to their advantages of high capacity, good conductivity, stable structure, and high output voltage, etc.

In some related technologies, the main technical challenge of hard carbon for sodium-ion batteries lies in the difficulty in balancing energy density and cycle performance.

SUMMARY

In view of this, the present invention provides an electrode material, a preparation method thereof, and a secondary battery, to resolve the the aforementioned technical problem.

In a first aspect, an embodiment of the present invention provides an electrode material, applied to a sodium-ion battery, in which the electrode material includes a carbon-containing powder;

in which a conductivity of the carbon-containing powder ranges from 36 S/cm to 41 S/cm; a mass percentage of nitrogen in the carbon-containing powder ranges from 0.2 wt% to 0.9 wt%; and a closed pore volume of the carbon-containing powder ranges from 0.03 $cm^3$/g to 0.07 $cm^3$/g.

Optionally, in some embodiments of the present invention, the mass percentage of nitrogen in the carbon-containing powder ranges from 0.4 wt% to 0.7 wt%.

Optionally, in some embodiments of the present invention, a compaction density of the carbon-containing powder ranges from 0.95 g/$cm^3$ to 1.05 g/$cm^3$; and/or,

a carbon layer spacing of the electrode material ranges from 0.37 nm to 0.39 nm; and/or,

a median particle size of the carbon-containing powder ranges from 3 $\mu$m to 15 $\mu$m; and/or,

a specific surface area of the carbon-containing powder ranges from 2.0 $m^2$/g to 10.0 $m^2$/g.

In a second aspect, an embodiment of the present invention provides a method for preparing an electrode material, including:

modifying a first carbon source to obtain a modified carbon source;

mixing the modified carbon source with a second carbon source and then performing pretreatment to obtain a first precursor;

oxidizing the first precursor to obtain a second precursor;

sintering the second precursor to obtain the carbon-containing powder;

in which a conductivity of the carbon-containing powder ranges from 36 S/cm to 41 S/cm; a mass percentage of nitrogen in the carbon-containing powder ranges from 0.2 wt% to 0.9 wt%; and a closed pore volume of the carbon-containing powder ranges from 0.03 $cm^3$/g to 0.07 $cm^3$/g.

Optionally, in some embodiments of the present invention, the first carbon source includes a plant carbon source.

Optionally, in some embodiments of the present invention, the plant carbon source is selected from at least one of a coconut shell, an almond shell, a pistachio shell, a macadamia nut shell, a jujube pit shell, a chestnut shell, a hazelnut shell, a peanut shell, a walnut shell, a peach core shell, a cotton, a wood, a bamboo, a straw, or a lignin.

Optionally, in some embodiments of the present invention, the second carbon source includes a carbon source having a melting point and/or a softening point.

Optionally, in some embodiments of the present invention, the carbon source having a melting point and/or a softening point includes an organic polymer carbon source and/or a saccharide carbon source.

Optionally, in some embodiments of the present invention, the organic polymer carbon source is selected from at least one of phenolic resin, epoxy resin, melamine resin, polyfurfuryl alcohol, polyaniline, furfural resin, polyethylene glycol, polyethylene oxide, polyvinylidene fluoride, acrylic resin or polyacrylonitrile; and/or

the carbohydrate carbon source is selected from at least one of starch, glucose, sucrose, maltose, lactose, fructose, cellulose and galactose.

Optionally, in some embodiments of the present invention, the modifying a first carbon source to obtain a modified carbon source includes:

performing a first oxidation treatment on the first carbon source to obtain a first oxidation product;

performing a first reduction treatment on the first oxidation product to obtain the modified carbon source.

Optionally, in some embodiments of the present invention, a first oxidant for the first oxidation treatment is selected from at least one of nitric acid and an acid solution of nitrate; the acid solution of nitrate is obtained by dissolving nitrate in an acid solution; the nitrate includes at least one of sodium nitrate, potassium nitrate, magnesium nitrate, zinc nitrate, iron nitrate, cobalt nitrate, nitrate, ammonium nitrate, calcium nitrate, lead nitrate, and cerium nitrate; the acid solution includes one or a combination of at least two of hydrochloric acid, hydrofluoric acid, phosphoric acid, and sulfuric acid; and/or,

an oxidation temperature of the first oxidation treatment ranges from 60 °C to 80 °C; and/or,

an oxidation time of the first oxidation treatment ranges from 3h to 24h; and/or,

a mass concentration of the nitric acid is 0.5 wt% to 5.0 wt%; a mass proportion of the nitrate in the acid solution of the nitrate is 0.5 wt% to 5.0 wt%; and a mass of the first carbon source and a solution mass of the first oxidant are in a mass ratio of 2 to 20.

Optionally, in some embodiments of the present invention, a first reductant for the first reduction treatment is selected from at least one of a formic acid, an ammonium formate, a hydrazine hydrate, a sodium sulfide, or a sodium thiosulfate; and/or,

a first catalyst for the first reduction treatment is selected from soluble salts of transition metal elements; and/or,

a reduction temperature of the first reduction treatment ranges from 60 °C to 80 °C; and/or,

a reduction time of the first reduction treatment ranges from 3h to 10h; and/or,

a mass ratio of the first oxidation product, the first reductant, the first catalyst, to a solvent ranges from 1: (0.3-3): (0.1-0.2): (1.5-10); and/or,

the solvent is selected from at least one of tetrahydrofuran, ethanol, benzene, isopropanol or pure water.

Optionally, in some embodiments of the present invention, the modifying the first carbon source to obtain the modified carbon source further includes:

centrifuging or suction filtering a product of the first oxidation treatment, performing washing to a first pH value, and then performing drying; and/or,

centrifuging or suction filtering a product of the first reduction treatment, perfroming washing to a second pH value, and then performing drying;

the first pH value ranges from 3 to 7, and the second pH value ranges from 3 to 7.

Optionally, in some embodiments of the present invention, the mixing the modified carbon source with the second carbon source and then performing pretreatment to obtain the first precursor includes:

mixing the modified carbon source with the second carbon source, and then performing heating and curing to obtain a cured product;

pre-carbonizing the cured product to obtain the first precursor.

Optionally, in some embodiments of the present invention, a heating temperature of the heating and curing ranges from 100 °C to 300 °C; and/or,

a heating time of the heating and curing ranges from 0.5h to 24h; and/or,

a heating temperature of the pre-carbonizing ranges from 450 °C to 650 °C; and/or,

a heating time of the pre-carbonizing ranges from 0.5h to 24h; and/or,

an atmosphere of the pre-carbonizing is an inert atmosphere or an oxygen-poor atmosphere; and/or,

the inert atmosphere is selected from at least one of a nitrogen atmosphere, an argon atmosphere, a neon atmosphere, a helium atmosphere, a xenon atmosphere, and a krypton atmosphere;

the oxygen-poor atmosphere is a gas atmosphere with an oxygen content of less than or equal to 1 wt%.

Optionally, in some embodiments of the present invention, the mixing the modified carbon source with the second carbon source and then performing pretreatment to obtain the first precursor further includes:

after mixing the modified carbon source with the second carbon source and before heating and curing, pressing the mixture of the modified carbon source and the second carbon source;

a mass ratio of the modified carbon source to the second carbon source is 1: (0.3-3.0);

crushing and sieving a product of the pre-carbonizing;

a crushing device for the crushing is selected from at least one of a preparation ball mill, an airflow pulverizer, a mechanical pulverizer, or a rolling mill; and/or,

a median particle size of the crushing treatment ranges from 3 $\mu$m to 15 $\mu$m; and/or,

a sieve mesh number of the sieving ranges from 30 mesh to 325 mesh; and/or,

a pressing pressure of the pressing ranges from 10 MPa to 20 MPa.

Optionally, in some embodiments of the present invention, the mixing the modified carbon source with the second carbon source and then performing pretreatment to obtain the first precursor further includes:

performing a purification treatment after the crushing;

the purification treatment includes:

mixing a product of the crushing with an acid solution and pure water in a mass ratio of 1: (0.1-1): (1.5-10), stirring for a preset time, and then performing a solid-liquid separation to obtain a solid product;

washing the solid product to a third pH value;

the acid solution is an aqueous solution selected from at least one of hydrochloric acid, hydrofluoric acid, nitric acid, phosphoric acid, or sulfuric acid; and the third pH value ranges from 2.5 to 4.5.

Optionally, in some embodiments of the present invention, the oxidizing the first precursor to obtain a second precursor includes:

performing a second oxidation treatment on the first precursor;

an atmosphere of the second oxidation treatment is an oxidizing atmosphere, the oxidizing atmosphere includes a carrier gas and an oxidizing gas, the carrier gas is selected from any one or a combination of at least two of nitrogen, argon, neon, helium, xenon or krypton; the oxidizing gas is selected from at least one of oxygen, ozone, air and carbon dioxide, and a volume content of the oxidizing gas in the oxidizing atmosphere ranges from 5 %VOL to 30 %VOL;

a temperature for the second oxidation treatment ranges from 500 °C to 800 °C; and a holding time for the second oxidation treatment ranges from 1h to 10h.

Optionally, in some embodiments of the present invention, in the step of sintering the second precursor to obtain the carbon-containing powder as the electrode material, a sintering temperature ranges from 1200 °C to 1500 °C; a sintering time ranges from 0.5h to 24h; a sintering atmosphere is an inert atmosphere, and the inert atmosphere is selected from at least one of a nitrogen atmosphere, an argon atmosphere, a neon atmosphere, a helium atmosphere, a xenon atmosphere, and a krypton atmosphere.

In a third aspect, an embodiment of the present invention provides an electrode, including the aforementioned electrode material or the electrode material obtained by using the aforementioned preparation method.

In a fourth aspect, an embodiment of the present invention provides a secondary battery, including the aforementioned electrode material, the electrode material obtained by using the aforementioned preparation method or the aforementioned electrode.

The beneficial effect of the present invention is to provide an electrode material and a preparation method thereof, a secondary battery, and an electrode, which improve performance by combining different types of carbon sources.

BRIEF DESCRIPTION OF DRAWINGS

To describe the technical solutions in the embodiments of the present invention more clearly, the following briefly describes the accompanying drawings that need to be used in description of the embodiments. It is obvious that the accompanying drawings in the following description are merely some embodiments of the invention, and a person skilled in the art may further obtain other accompanying drawings based on these accompanying drawings without creative efforts.

FIG. 1 is a schematic diagram of main steps of a method for preparing an electrode material according to some embodiments of the present invention;

FIG. 2 is a main schematic flowchart of a method for preparing an electrode material according to some embodiments of the present invention;

FIG. 3 is a specific capacity side graph of the carbon-containing powder obtained in Example 1, Comparative Example 17 and Comparative Example 18;

FIG. 4 is a normal temperature cycle performance curve of the carbon-containing powder obtained in Example 1, Comparative Example 17 and Comparative Example 18;

FIG. 5 is an SEM photograph and a cross-sectional photograph of the carbon-containing powder obtained in Example 1 (A, C) and Comparative Example 17 (B, D).

DETAILED DESCRIPTION

The technical proposals in the embodiments of the present invention will be clearly and completely described below in combination with the drawings in the embodiments of the present invention. Obviously, the described embodiments are only a part of the embodiments in the present invention, not all of them. Based on the embodiments of the present invention, all other embodiments obtained by those skilled in the art without making inventive efforts fall within the protection scope of the present invention. Additionally, it should be understood that the specific embodiments described herein are only to illustrate and explain the present invention and are not intended to limit the present invention.

Unless otherwise defined, all technical and scientific terms used herein have the same meaning as commonly understood by those skilled in the art to which the present invention belongs. The terms used in the specification of the present invention are only for the purpose of describing the specific embodiments and are not intended to limit the present invention. The term "and/or" used herein includes any and all combinations of one or more of the associated listed items.

In the present invention, unless otherwise specified, the directional terms such as "up" and "down" generally refer to the up and down directions when the device is in actual use or operation, and specifically refer to the orientation shown in the drawings; and the terms "inner" and "outer" refer to the inside and outside relative to the outline of the device. Additionally, in the description of the present invention, the term "include" refers to "include but is not limited to". The terms "first", "second", "third" and so on are used only as a mark, and do not impose numerical requirements or establish an order.

In the present invention, "and/or" describes an association relationship of associated objects, indicating that three relationships may exist, for example, A and/or B may indicate a case in which A exists alone, A and B exist simultaneously, and B exists alone. A and B may be singular or plural.

In the present invention, the term "at least one" refers to one or more, and "a plurality of" refers to two or more. The phrases "one or more", "at least one of the following", or similar expressions, refer to any combination of these items, including any single item or any combination of multiple items. For example, the phrases "at least one of a, b, or c" or "at least one of a, b, and c" can indicate: a, b, c, a-b (i.e., a and b), a-c, b-c, or a-b-c. Particularly, a, b, and c can be a single item or multiple items.

In the present invention, in the description of forming one layer "on" another layer, the term "on" is used in a broad sense, which can indicate that the formed layer is adjacent to a certain layer, or that there are other intermediate structural layers between the formed layer and a certain layer. For example, in the description of forming a second electrode "on" a first carrier functional layer, the term "on" can refer to that the second electrode is directly adjacent to the first carrier functional layer, or that there are other intermediate structural layers, such as an emissive layer, between the second electrode and the first carrier functional layer.

The various embodiments of the present invention may exist in the form of a range. It should be understood that the description in the form of a range is only for convenience and brevity and should not be considered as a rigid limitation on the scope of the present disclosure. Thus, it should be understood that the range description specifically discloses all possible sub-ranges and individual values within the range. For example, it should be understood that the range description of 1 to 6 specifically discloses all possible sub-ranges, such as 1 to 3, 1 to 4, 1 to 5, 2 to 4, 2 to 6, 3 to 6, and etc., as well as individual values within that range, such as 1, 2, 3, 4, 5, and 6. This applies regardless of the range. Additionally, the numerical ranges herein refer to including any referenced numbers (fractions or integers) within the specified range.

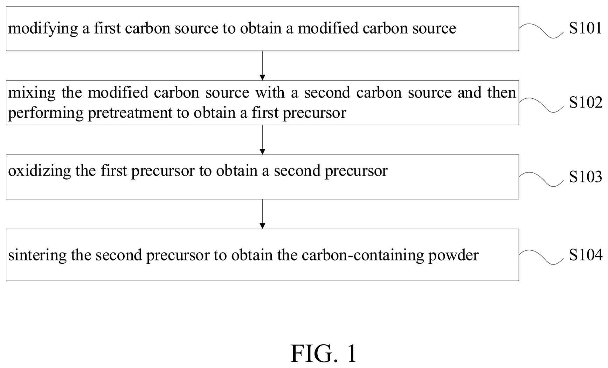

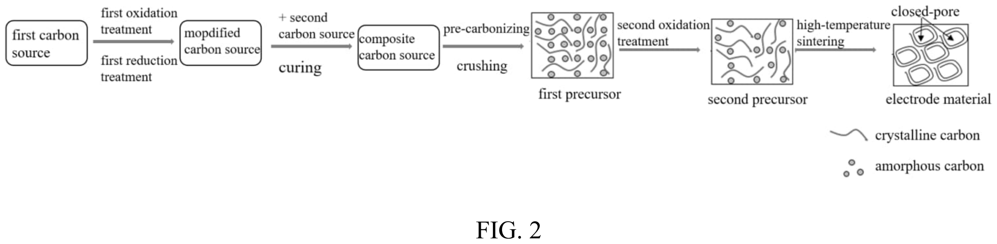

Referring to FIG. 1 and FIG. 2, in a first aspect, an embodiment of the present invention provides an electrode material, applied to a sodium-ion battery, in which the electrode material includes a carbon-containing powder, a conductivity of the carbon-containing powder ranges from 36 S/cm to 41S/cm, a mass percentage of nitrogen in the carbon-containing powder ranges from 0.2 wt% to 0.9 wt%, and a closed pore volume of the carbon-containing powder ranges from 0.03 $cm^3$/g to 0.07 $cm^3$/g.

In a second aspect, an embodiment of the present invention provides a method for preparing an electrode material, including:

S101: modifying a first carbon source to obtain a modified carbon source;

S102: mixing the modified carbon source with a second carbon source and then performing pretreatment to obtain a first precursor;

S103: oxidizing the first precursor to obtain a second precursor;

S104: sintering the second precursor to obtain the carbon-containing powder.

In the aforementioned proposals, the mass percentage of nitrogen ranges from 0.2 wt% to 0.9 wt%, the conductivity ranges from 36 S/cm to 41 S/cm, and the closed pore volume ranges from 0.03 $cm^3$/g to 0.07 $cm^3$/g, so that the carbon-containing powder can have closed pores formed by stereo crosslinking of graphite crystallites.

Specifically, the sintering temperature is controlled within a certain range.

When the sintering temperature is high, the graphite crystallites grow, the nitrogen content decreases significantly, the degree of local graphitization of the carbon framework increases, and the local contraction of the carbon matrix generates a closed hole with a large size and a large pore volume, resulting in a rise in the conductivity and the volume of the closed pores; and when the sintering temperature is low, sufficient energy cannot be provided for "the pores are converted into closed pores", resulting in a low closed pore, a low electrical conductivity and a high nitrogen content.

If only the closed pore volume is high (namely, among the three factors, nitrogen mass percentage, conductivity, and closed pore volume, only the closed pore volume exceeds the specified range), it is likely due to closed pores introduced by the pore-forming process. If the closed pore volume is low, it indicates an excessively high carbon matrix density, suggesting a significant trend of "soft carbonization" in the carbon matrix. In this case, the closed pores are generated by the cross-linking of relatively parallel-aligned graphitic microcrystals.

Therefore, when the aforementioned three factors are controlled within corresponding ranges, it indicates that the carbon-containing powder has closed pores formed by stereo crosslinking of graphitic microcrystals.

In addition, since the closed pores formed by stereo crosslinking of graphite crystallites have the characteristics of small pore volume and high sodium storage activity, the closed pores contribute capacity performance without sacrificing compaction density, and in addition, the closed pores can be used as sodium ion diffusion channels in carbon matrix to improve dynamic performance, thereby contributing to fast charging and life. Similarly, nitrogen-containing doping improves the conductivity and wettability of carbon matrix, inhibits polarization, and improves dynamic performance, which can also contribute to fast charging and life. The volume of the closed pores is within a certain specified range to ensure that the carbon-containing powder does not contain or contains a small amount of "pores" (generated due to the cracking of light components in the carbon source, and the uneven shrinkage of the carbon skeleton), thereby reflecting the improvement of compaction density performance.

A carbonaceous material outside the above range has a high probability that the closed pores are not formed due to the stereo crosslinking of graphite crystallites, and sizes and volumes of the closed pores are relatively large, resulting in a decrease in compaction density, and poor sodium storage activity, resulting in a weak electric field in the pore region, and the diffusion of sodium ion in the closed pores is not used, so that the dynamic performance is poor, and the fast charging and life are poor.

It can be understood that the present invention improves the electrochemical performance when the carbon-containing powder is used as an electrode material to make a sodium-ion battery by selecting the conductivity, the nitrogen element mass percentage and the closed pore volume of the carbon-containing powder.

In some embodiments of the present invention, the mass percentage of nitrogen in the carbon-containing powder ranges from 0.4 wt% to 0.7 wt%. The closed pore volume of the carbon-containing powder ranges from 0.03 $cm^3$/g to 0.07 $cm^3$/g.

It should be noted that the closed hole in the present invention is not a completely closed hole, and the closed hole in the present invention also includes a hole with a gap and not completely closed. Helium molecule can enter and exit the closed hole through the gap, and other components in the sodium-ion battery electrolyte except sodium ion cannot enter and exit the closed hole through the gap.

The formation of the gap is not limited, and the gap may be formed by an layer spacing between the carbon layers, or may be formed by a structure such as a notch or a channel communicating with the closed hole on the carbon matrix.

In some embodiments of the present invention, the aforementioned compacted density refers to a 3T powder compacted density. Specifically, the value range of the compaction density of the carbon-containing powder is 0.95 $g/cm^3$ to 1.05 $g/cm^3$; and/or the value range of the closed pore volume of the carbon-containing powder ranges from 0.03 $cm^3$/g to 0.07 $cm^3$/g; and/or the median particle size of the carbon-containing powder ranges from 3 $\mu$m to 15 $\mu$m ; and/or the specific surface area of the carbon-containing powder ranges from 2.0 $m^2$/g to 10.0 $m^2$/g.

In some embodiments of the present invention, the first carbon source includes a plant carbon source.

In some embodiments of the present invention, the plant carbon source is selected from at least one of a coconut shell, an almond shell, a pistachio shell, a macadamia nut shell, a jujube pit shell, a chestnut shell, a hazelnut shell, a peanut shell, a walnut shell, a peach core shell, a cotton, a wood, a bamboo, a straw, or a lignin.

In some embodiments of the present invention, the second carbon source includes a meltable carbon source.

In some embodiments of the present invention, the meltable carbon source includes an organic polymer carbon source and/or a saccharide carbon source.

In some embodiments of the present invention, the organic polymer carbon source is selected from at least one of a phenolic resin, an epoxy resin, a melamine resin, a polyfurfuryl alcohol, a polyaniline, a furfural resin, a polyethylene glycol, a polyethylene oxide, a polyvinylidene fluoride, an acrylic resin, or a polyacrylonitrile; and/or the carbohydrate carbon source is selected from at least one of a starch, a glucose, a sucrose, a maltose, a lactose, a fructose, a cellulose or a galactose.

In some embodiments of the present invention, the modifying the first carbon source to obtain the modified carbon source includes:

performing a first oxidation treatment on a first carbon source to obtain a first oxidation product;

performing a first reduction treatment on the first oxidation product to obtain the modified carbon source.

In some embodiments of the present invention, a first oxidant for the first oxidation treatment is selected from at least one of a nitric acid or an acid solution of nitrate; the acid solution of nitrate is obtained by dissolving nitrate in an acid solution; the nitrate includes at least one of sodium nitrate, potassium nitrate, magnesium nitrate, zinc nitrate, ron nitrate, cobalt nitrate, nitrate, ammonium nitrate, calcium nitrate, lead nitrate, or cerium nitrate; the acid solution includes one or a combination of at least two of hydrochloric acid, hydrofluoric acid, phosphoric acid, or sulfuric acid.

In some embodiments of the present invention, an oxidation temperature of the first oxidation treatment ranges from 60 °C to 80 °C.

In some embodiments of the present invention, an oxidation time of the first oxidation treatment ranges from 3h to 24h.

In some embodiments of the present invention, a mass concentration of the nitric acid ranges from 0.5 wt% to 5.0 wt%, and a mass proportion of the nitrate in the acid solution of nitrate ranges from 0.5 wt% to 5.0 wt%.

In some embodiments of the present invention, a first reductant for the first reduction treatment is selected from at least one of formic acid, ammonium formate, hydrazine hydrate, sodium sulfide, or sodium thiosulfate.

In some embodiments of the present invention, a first catalyst for the first reduction treatment is selected from soluble salts of transition metal elements.

In some embodiments of the present invention, a reduction temperature of the first reduction treatment ranges from 60 °C to 80 °C.

In some embodiments of the present invention, a reduction time of the first reduction treatment ranges from 3h to 10h.

In some embodiments of the present invention, a mass ratio of the modified carbon source, the first reductant, the first catalyst, to a solvent ranges from 1: (0.3-3): (0.1-0.2): (1.5-10).

In some embodiments of the present invention, the solvent is selected from at least one of tetrahydrofuran (THF), ethanol, benzene, isopropanol or pure water.

In some embodiments of the present invention, the modifying a first carbon source to obtain a modified carbon source further includes:

centrifuging or suction filtering a product of the first oxidation treatment, perfroming washing to a first pH value, and then performing drying; and/or,

centrifuging or suction filtering a product of the first reduction treatment, washing to a second pH value, and then drying;

in which the first pH value ranges from 3 to 7, and the second pH value ranges from 3 to 7.

In some embodiments of the present invention, the mixing the modified carbon source with the second carbon source and then performing pretreatment to obtain the first precursor includes:

mixing the modified carbon source with a second carbon source, and then performing heating and curing to obtain a cured product;

pre-carbonizing the cured product to obtain the first precursor.

In some embodiments of the present invention, a heating temperature of the heating and curing ranges from 100 °C to 300 °C.

In some embodiments of the present invention, a heating time of the heating and curing ranges from 0.5h to 24h.

In some embodiments of the present invention, a heating temperature of the pre-carbonizing ranges from 450 °C to 650 °C.

In some embodiments of the present invention, a heating time of the pre-carbonizing ranges from 0.5h to 24h.

In some embodiments of the present invention, an atmosphere of the pre-carbonizing is an inert atmosphere or an oxygen-poor atmosphere; the inert atmosphere is selected from at least one of a nitrogen atmosphere, an argon atmosphere, a neon atmosphere, a helium atmosphere, a xenon atmosphere, or a krypton atmosphere; the oxygen-poor atmosphere is a gas atmosphere with an oxygen content of less than or equal to 1 wt%.

In some embodiments of the present invention, the mixing the modified carbon source with the second carbon source and then performing pretreatment to obtain the first precursor further includes:

after mixing the modified carbon source with a second carbon source and before heating and curing, pressing a mixture of the modified carbon source and the second carbon source;

a mass ratio of the modified carbon source to the second carbon source is 1: (0.3-3.0);

crushing and sieving a product of the pre-carbonizing.

In some embodiments of the present invention, a crushing device for the crushing is selected from at least one of a preparation ball mill, an airflow pulverizer, a mechanical pulverizer, or a rolling mill.

In some embodiments of the present invention, a median particle size of the crushing treatment ranges from 3 μm to 15 μm.

In some embodiments of the present invention, a sieve mesh number of the sieving ranges from 30 mesh to 325 mesh.

In some embodiments of the present invention, a pressing pressure of the pressing ranges from 10 MPa to 20 MPa.

In some embodiments of the present invention, the mixing the modified carbon source with a second carbon source and then performing pretreatment to obtain the first precursor further includes:

performing a purification treatment after the crushing;

in which the purification treatment includes:

mixing a product of the crushing with an acid solution and pure water in a mass ratio of 1: (0.1-1): (1.5-10), stirring for a preset time, and then performing a solid-liquid separation to obtain a solid product;

washing the solid product to a third pH value;

in which the acid solution is an aqueous solution selected from at least one of hydrochloric acid, hydrofluoric acid, nitric acid, phosphoric acid, or sulfuric acid; and the third pH value ranges from 2.5 to 4.5.

In some embodiments of the present invention, the oxidizing the first precursor to obtain a second precursor includes:

performing a second oxidation treatment on the first precursor;

an atmosphere of the second oxidation treatment is an oxidizing atmosphere, the oxidizing atmosphere includes a carrier gas and an oxidizing gas, the carrier gas is an inert gas, the inert gas includes any one or a combination of at least two of nitrogen, argon, neon, helium, xenon or krypton; the oxidizing gas is selected from at least one of oxygen, ozone, air and carbon dioxide, and a volume content of the oxidizing gas in the oxidizing atmosphere ranges from 5 % VOL to 30 %VOL.

A temperature for the first oxidation treatment on the first precursor ranges from 500 °C to 800 °C; and a holding time for the first oxidation treatment ranges from 1h to 10h.

In some embodiments of the present invention, in the step of sintering the second precursor to obtain the carbon-containing powder as the electrode material, a sintering temperature ranges from 1200 °C to 1500 °C; a sintering time ranges from 0.5h to 24h; a sintering atmosphere is an inert atmosphere, and the inert atmosphere is selected from at least one of a nitrogen atmosphere, an argon atmosphere, a neon atmosphere, a helium atmosphere, a xenon atmosphere, and a krypton atmosphere.

In a third aspect, an embodiment of the present invention provides an electrode, including the aforementioned electrode material or the electrode material obtained by using the aforementioned preparation method.

In a fourth aspect, an embodiment of the present invention provides a secondary battery, including the aforementioned electrode material, the electrode material obtained by using the aforementioned preparation method or the aforementioned electrode.

By adopting the above solution, according to the respective advantages and disadvantages of preparing hard carbon based on plant-based carbon source and polymer (organic polymer or saccharide) carbon sources, the two carbon sources are compounded and shortened, supplemented with oxidation modification, and the hard carbon material with high capacity, high compaction and long life performance is prepared. The plant-based carbon source has the advantages of cheap and readily available carbon sources and renewable and new, and is cost-effective. However, the light components of the plant-based carbon source are cracked to produce gas, and the carbon skeleton is unevenly shrunk to produce a large number of "pores" with large size and large volume, resulting in low density of the plant-based carbon source. In addition, the plant-based carbon source has fewer inherent sodium storage sites, fewer sites for modification and volume extraction, and it is difficult to improve the capacity performance, so the plant-based carbon source often has a low capacity; the polymer carbon source has abundant hydroxyl functional groups, and its pre-carbonized material can modify and extract more sites, but the degree of stereo crosslinking between polymer hard carbon graphite microcrystallites is low, the diffusion internal resistance of sodium ion is large, and the kinetic performance is poor. In the present invention, the plant-based carbon source is subjected to first oxidation and first reduction to prepare a modified carbon source, and then mixed with a polymer carbon source, laminated, heated and cured. The polymer carbon source molecules melt or soften, diffuse to the plant-based carbon source molecular gap, and undergo a sufficient crosslinking reaction with the polymer carbon source molecules, thereby synthesizing a type of composite carbon source with microstructure isomerization and high density. Due to the characteristics of sufficient crosslinking and high density of carbon source molecules, the composite carbon source uniformly shrinks during the pre-carbonized process, inhibits the generation of "pores", reduces the pore volume, and increases the density performance. The composite carbon source-derived hard carbon graphite crystallites are three-dimensionally crosslinked, the internal sodium ion diffusion resistance of the particles is low, and the kinetic performance is good, thereby obtaining a hard carbon negative electrode material with high compaction density, fast charging and long life. In addition, first oxidation and first reduction are performed on the first carbon source (plant-based carbon source) to obtain a modified first carbon source having a nitrogen-containing cross-linking reaction group ($-NH_2$, $-NH-$), and then the modified first carbon source is composited with a second carbon source (organic polymer carbon source or saccharide carbon source) to obtain a nitrogen-containing composite carbon source, deriving to obtain a nitrogen-doped hard carbon, which improves the conductivity and wettability of hard carbon electrode, improves the kinetic performance thereof, and improves the capacity performance.

In addition, the plant-based carbon source-derived pre-carbonized material has higher crystalline carbon content and less amorphous carbon content; the polymer carbon source-derived pre-carbonized material has less crystalline carbon content and more amorphous carbon content; and the composite carbon source-derived pre-carbonized material has the characteristics of moderate crystalline carbon content, moderate amorphous carbon content, and uniform distribution of amorphous carbon among crystalline carbon. The sp3 hybrid carbon atom content of amorphous carbon is high, the chemical bond energy is small, and it is easy to break; the sp2 hybrid carbon atom content of crystalline carbon is high, the chemical bond energy is large, and it is not easy to break. Therefore, after the composite carbon source pre-carbonized material is subjected to the second oxidation modification, the amorphous carbon is directionally etched, and the obtained second precursor has pore features with a large number of pores (pores communicating with the interface), a small pore size (< 2 nm), and uniform pore distribution. After high temperature sintering, the pores are converted into closed pores with small pore volume, which contributes to sodium storage capacity and high compaction density performance.

Example 1

(1) 2.5 wt% nitric acid solution was prepared, 1 mass of bamboo powder (100 mesh) was added to a 3 mass of the above 2.5 wt% nitric acid solution, heated to 60 °C under stirring, insulated for 24h, cooled, solid-liquid separated, washed with pure water until pH=4, and dried to obtain a first oxidation product; the first oxidized product, formic acid, ferric chloride and tetrahydrofuran were added into tetrahydrofuran at a mass ratio of 1:0.3:0.2:10, heated to 60 °C under stirring, kept at the temperature for 5h, cooled, washed with pure water until pH=4, and dried to obtain a modified carbon source.

(2) The modified carbon source and a phenolic resin (100 mesh) were mixed at a mass ratio of 1:0.5, the mixture was pressed under a pressure of 20 MPa, the obtained material was heated to 150 °C for heating and curing, kept at the temperature for 2h, and cooled; the obtained material was transferred to a box furnace, heated to 450 °C in a nitrogen atmosphere for pre-carbonization, held for 24h, cooled, crushed, and air-pulverized to a median particle size of about 5.0 $\mu$m to obtain a crushed material;

The crushed material, hydrochloric acid (with a concentration of 31 wt%), hydrofluoric acid (with a concentration of 55 wt%) and pure water were mixed at a mass ratio of 1:0.8:0.15:3, heated to 60 °C, stirred for 24h, solid-liquid separated, washed to a pH value of 4, and dried to obtain a first precursor.

(3) The first precursor was placed in a rotary furnace, a mixed gas of carbon dioxide and nitrogen (the volume proportion of carbon dioxide was 30% VOL) was introduced, the temperature was raised to 800 °C for a second oxidation treatment, kept for 3h, and cooled to obtain a second precursor.

(4) The second precursor was placed in a tube furnace, heated to 1300 °C in a nitrogen atmosphere for high-temperature sintering, held for 4h, cooled, VC dispersed, sieved at 325 mesh to obtain a carbon-containing powder of the electrode material.

Example 2

(1) Ferric nitrate, hydrochloric acid (31 wt%) and pure water were used as a mass ratio of 2: 1: 97, hydrochloric acid and ferric nitrate were sequentially added to pure water, stirred evenly, and a 2 wt% ferric nitrate hydrochloric acid solution was prepared.

The litchi tree powder (100 mesh) with a mass of 1 was added to the above ferric nitrate hydrochloric acid solution with a mass of 5, heated to 80 °C under stirring, kept at the temperature for 3h, cooled, solid-liquid separated, washed with pure water until pH=5, and dried to obtain a first oxidation product; the first oxidation product, ammonium formate, nickel chloride were added into ethanol at a mass ratio of 1: 3: 0.1: 6, heated to 80 °C under stirring, kept at the temperature for 3h, cooled, washed with pure water until pH=7, and dried to obtain a modified carbon source.

(2) The modified carbon source and a sucrose (100 mesh) were mixed at a mass ratio of 1: 3, the mixture was pressed under a pressure of 15 MPa, the obtained material was heated to 150 °C for heating and curing, kept at the temperature for 24h, and cooled; the obtained material was transferred to a box furnace, heated to 650 °C in a helium atmosphere for pre-carbonization, held for 24h, cooled, crushed, and air-pulverized to a median particle size of about 3.0 $\mu$m to obtain a crushed material.

The crushed material, nitric acid (with a concentration of 50 wt%) and pure water were mixed at a mass ratio of 1: 0.1: 1.5, heated to 70 °C, stirred for 6h, solid-liquid separated, washed to a pH value of 4, and dried to obtain a first precursor.

(3) The first precursor was placed in a rotary furnace, a mixed gas of oxygen and helium (the volume proportion of oxygen was 10 %VOL) was introduced, the temperature was heated to 500 °C for a second oxidation treatment, kept for 10h, and cooled to obtain a second precursor.

(4) The second precursor was placed in a tube furnace, heated to 1500 °C in a krypton atmosphere for high-temperature sintering, held for 4h, cooled, VC dispersed, and sieved at 325 mesh to obtain a carbon-containing powder of the electrode material.

Example 3

(1) Magnesium nitrate, sulfuric acid (30 wt%) and pure water were used as a mass ratio of 5: 1: 94, sulfuric acid and magnesium nitrate were sequentially added to pure water, stirred evenly, and a 5 wt% magnesium nitrate sulfuric acid solution was prepared.

The walnut shell powder (100 mesh) with a mass of 1 was added to the above magnesium nitrate sulfuric acid solution with a mass of 3, heated to 60 °C under stirring, kept at the temperature for 6h, cooled, solid-liquid separated, washed with pure water until pH=7, and dried to obtain a first oxidation product; the first oxidation product, hydrazine hydrate, zinc sulfate and isopropanol were added into isopropanol at a mass ratio of 1: 1: 0.15: 1.5, heated to 75 °C under stirring, kept at the temperature for 10h, cooled, washed with pure water until pH=4, and dried to obtain a modified carbon source.

(2) The modified carbon source and a polyaniline (100 mesh) were mixed at a mass ratio of 1: 1.5, the mixture was pressed under a pressure of 20 MPa, the obtained material was heated to 300 °C for heating and curing, kept at the temperature for 0.5h, and cooled; the obtained material was transferred to a push plate kiln, heated to 500 °C in an argon atmosphere for pre-carbonization, kept at the temperature 4h, cooled, crushed, and air-pulverized to a median particle size of about 15.0 $\mu$m to obtain a crushed material.

The crushed material, nitric acid (with a concentration of 50 wt%) and pure water were mixed at a mass ratio of 1: 0.1: 1.5, heated to 80 °C, stirred for 6h, solid-liquid separated, washed to a pH value of 4.5, and dried to obtain a first precursor.

(3) The first precursor was placed in a rotary furnace, a mixed gas of ozone and krypton (the volume proportion of ozone was 5 %VOL) was introduced, heated to 800 °C for a second oxidation treatment, kept for 3h, and cooled to obtain a second precursor.

(4) The second precursor was placed in a tube furnace, heated to 1250 °C in a nitrogen atmosphere for high-temperature sintering, held for 6h, cooled, VC dispersed, and sieved at 325 mesh to obtain a carbon-containing powder of the electrode material.

Example 4

(1) Sodium nitrate, hydrofluoric acid (40 wt%) and pure water were used at a mass ratio of 0.5: 1: 98.5, hydrochloric acid and sodium nitrate were sequentially added to pure water, stirred evenly, and a 0.5 wt% sodium nitrate hydrofluoricc acid solution was prepared.

The peanut shell powder (100 mesh) with a mass of 1 was added to the above sodium nitrate hydrofluoricc acid solution with a mass of 20, heated to 60 °C under stirring, kept at the temperature for 10h, cooled, solid-liquid separated, washed with pure water until pH=4, and dried to obtain a first oxidation product; the first oxidation product, sodium sulfide, cobalt sulfate were added into pure water at a mass ratio of 1:1: 0.18: 5, heated to 65 °C under stirring, kept at the temperature for 10h, cooled, washed with pure water until pH=7, and dried to obtain a modified carbon source.

(2) The modified carbon source and a furfural (100 mesh) were mixed at a mass ratio of 1: 0.3, the mixture was pressed under a pressure of 10 MPa, the obtained material was heated to 200 °C for heating and curing, kept at the temperature for 5h, and cooled; the obtained material was transferred to a box furnace, heated to 550 °C in a krypton atmosphere for pre-carbonization, kept at the temperature 2h, cooled, crushed, and air-pulverized to a median particle size of about 8.0 $\mu$m to obtain a crushed material.

The crushed material, sulfuric acid (with a concentration of 50 wt%), hydrofluoric acid (with a concentration of 55 wt%) and pure water were mixed at a mass ratio of 1: 0.5: 0.1: 10, heated to 80 °C, stirred for 6h, solid-liquid separated, washed to a pH value of 4.5, and dried to obtain a first precursor.

(3) The first precursor was placed in a rotary furnace, a mixed gas of oxygen and nitrogen (the volume proportion of oxygen was 5 %VOL) was introduced, heated to 800 °C for a second oxidation treatment, kept for 5h, and cooled to obtain a second precursor.

(4) The second precursor was placed in a tube furnace, heated to 1500 °C in a krypton atmosphere for high-temperature sintering, held for 0.5h, cooled, VC dispersed, and sieved at 325 mesh to obtain a carbon-containing powder of the electrode material.

Example 5

(1) Potassium nitrate, phosphoric acid (50 wt%) and pure water were used at a mass ratio of 2.5: 0.5: 97, phosphoric acid and potassium nitrate were sequentially added to pure water, stirred evenly, and a 2.5 wt% potassium nitrate phosphoric acid solution was prepared.

The cotton straw powder (100 mesh) with a mass of 1 was added to the above potassium nitrate phosphate solution with a mass of 2, heated to 75 °C under stirring, kept at the temperature for 3h, cooled, solid-liquid separated, washed with pure water until pH=5, and dried to obtain a first oxidation product; the first oxidation product, sodium thiosulfate, chromium nitrate were added into pure water at a mass ratio of 1: 0.6: 0.12: 3, heated to 65 °C under stirring, kept at the temperature for 4h, cooled, washed with pure water until pH=6, and dried to obtain a modified carbon source.

(2) The modified carbon source and a corn starch (200 mesh) were mixed at a mass ratio of 1: 0.8, and the mixture was pressed under a pressure of 20 MPa, the obtained material was heated to 150 °C for heating and curing, kept at the temperature for 3h, and cooled; the obtained material was transferred to a tube furnace, heated to 600 °C in a nitrogen atmosphere for pre-carbonization, kept at the temperature 10h, cooled, crushed, and air-pulverized to a median particle size of about 6.0 $\mu$m to obtain a crushed material.

The crushed material, sulfuric acid (with a concentration of 50 wt%), hydrofluoric acid (with a concentration of 55 wt%) and pure water were mixed at a mass ratio of 1: 0.3: 0.1: 3, heated to 75 °C, stirred for 3h, solid-liquid separated, washed to a pH value of 4.5, and dried to obtain a first precursor.

(3) The first precursor was placed in a rotary furnace, a mixed gas of oxygen and nitrogen (the volume proportion of oxygen was 10 %VOL) was introduced, heated to 750 °C for a second oxidation treatment, held for 3h, and cooled to obtain a second precursor.

(4) the second precursor was placed in a tube furnace, heated to 1400 °C in an argon atmosphere for high-temperature sintering, held for 24h, cooled, VC dispersed, and sieved at 325 mesh to obtain a carbon-containing powder of the electrode material.

Comparative Example 1

The difference between Comparative Example 1 and Example 1 is that the concentration of oxidant used in step (1) is too low, that is,

Step (1): 0.3 wt% nitric acid solution was prepared, the rest steps were the same as those in Example 1.

Comparative Example 2

The difference between Comparative Example 2 and Example 1 is that the concentration of oxidant used in step (1) is too high, that is,
Step (1): 8 wt% nitric acid solution was prepared, the rest steps were the same as those in Example 1.

Comparative Example 3

Comparative Example 3 differs from Example 1 in that the amount of reductant used in step (1) is insufficient, that is,
Step (1): the mass ratio of the first oxidation product, formic acid, ferric chloride and tetrahydrofuran was 1: 0.3: 0.1: 10, and the first oxidation product, formic acid and ferric chloride were added to tetrahydrofuran, and the rest steps were the same as those in Example 1.

Comparative Example 4

Comparative Example 4 differs from Example 1 in that no reductant was used in step (1), that is,
Step (1): the mass ratio of the first oxidation product, formic acid and tetrahydrofuran was 1: 0.3: 10, and the first oxidation product, formic acid and ferric chloride were added to tetrahydrofuran, and the rest steps were the same as those in Example 1.

Comparative Example 5

Comparative Example 5 differs from Example 1 in that the proportion of the modified carbon source in step (2) is too high, that is,
Step (2): the modified carbon source and the thermoplastic phenolic resin (100 mesh) were mixed at a mass ratio of 1: 0.3, and the rest steps were the same as those in Example 1.

Comparative Example 6

Comparative Example 6 differs from Example 1 in that the proportion of the modified carbon source in step (2) is too low, that is,
Step (2): the modified carbon source and the thermoplastic phenolic resin (100 mesh) were mixed at a mass ratio of 1: 5, and the rest steps were the same as those in Example 1.

Comparative Example 7

Comparative Example 7 differs from Example 1 in that the curing temperature in step (2) is too low, that is,
Step (2): the obtained material was heated to 70 °C for heating and curing, and the temperature was kept for 2h, the rest steps were the same as those in Example 1.

Comparative Example 8

Comparative Example 8 differs from Example 1 in that the curing temperature in step (2) is too high, that is,
Step (2): the obtained material was heated to 400 °C for heating and curing, and the temperature was kept for 2h, the rest steps were the same as those in Example 1.

Comparative Example 9

Comparative Example 9 differs from Example 1 in that the pre-carbonization temperature in step (2) is too low, that is,
Step (2): the obtained material was transferred to a box furnace, heated to 400 °C in a nitrogen atmosphere for pre-carbonization, and kept at the temperature for 24h, the rest steps were the same as those in Example 1.

Comparative Example 10

Comparative Example 10 differs from Example 1 in that the pre-carbonization temperature in step (2) is too high, that is,

Step (2): the obtained material was transferred to a box furnace, heated to 800 °C in a nitrogen atmosphere for pre-carbonization, and kept for 24h; the rest steps were the same as those in Example 1.

Comparative Example 11

Comparative Example 11 differs from Example 1 in that the temperature of the second oxidation treatment in step (3) is too low, that is,
Step (3): the first precursor was placed in a rotary furnace, a mixed gas of carbon dioxide and nitrogen (the volume proportion of carbon dioxide is 30 %VOL) was introduced, heated to 400 °C for a second oxidation treatment, held for 3h, and cooled to obtain a second precursor; the rest steps were the same as those in Example 1.

Comparative Example 12

Comparative Example 12 differs from Example 1 in that a temperature of the second oxidation treatment in step (3) is too high, that is,
Step (3): the first precursor was placed in a rotary furnace, a mixed gas of carbon dioxide and nitrogen (the volume proportion of carbon dioxide was 30 %VOL) was introduced, heated to 1000 °C for a second oxidation treatment, kept at the temperation for 3h, and cooled to obtain a second precursor; the rest steps were the same as those in Example 1.

Comparative Example 13

Comparative Example 13 differs from Example 1 in that the volume proportion of the carbon dioxide in step (3) is too high, that is,
Step (3): the first precursor was placed in a rotary furnace, a mixed gas of carbon dioxide and nitrogen (the volume proportion of carbon dioxide was 50 %VOL) was introduced, the temperation was raised to 800 °C for a second oxidation treatment, held for 3h, and cooled to obtain a second precursor; the rest steps were the same as those in Example 1.

Comparative Example 14

Comparative Example 14 differs from Example 1 in that the volume proportion of the carbon dioxide in step (3) is too low, that is,
Step (3): the first precursor was placed in a rotary furnace, a mixed gas of carbon dioxide and nitrogen (the volume proportion of carbon dioxide was 3 %VOL) was introduced, the temperature was raised to 800 °C for a second oxidation treatment, held for 3h, and cooled to obtain a second precursor; the rest steps were the same as those in Example 1.

Comparative Example 15

Comparative Example 14 differs from Example 1 in that the temperature of the sintering in step (4) is too low, that is,
Step (4): the second precursor was placed in a tube furnace, heated to 1100 °C in a nitrogen atmosphere for high-temperature sintering, kept at 4h, cooled, VC dispersed, and sieved at 325 mesh to obtain a carbon-containing powder of the electrode material. The rest steps were the same as those in Example 1.

Comparative Example 16

Comparative Example 16 differs from Example 1 in that the temperature of the sintering in step (4) is too high, that is,
Step (4): the second precursor was placed in a tube furnace, heated to 1600 °C in a nitrogen atmosphere for high-temperature sintering, held at 4h, cooled, VC dispersed, and sieved at 325 mesh to obtain a carbon-containing powder of the electrode material. The rest steps were the same as those in Example 1.

Comparative Example 17

The bamboo powder (100 mesh) was pressed under a pressure of 20 MPa, and the obtained material was heated to 150 °C for heating and curing, held for 2h, and cooled; the obtained material was transferred to a box furnace, heated to 450 °C in a nitrogen atmosphere for pre-carbonization, held for 24h, cooled, crushed, and air-pulverized to a median particle size of about 5.0 $\mu$m to obtain a crushed material.
The crushed material, hydrochloric acid (with a concentration of 31 wt%), hydrofluoric acid (with a concentration of 55 wt%) and pure water were mixed according to a mass ratio of 1: 0.8: 0.15: 3, heated to 60 °C, stirred for 24h, solid-liquid separated, washed to a pH value of 4, dried, placed in a tube furnace, heated to 1300 °C in a nitrogen atmosphere for high-temperature sintering, kept at the temperature of 4h, cooled, VC dispersed, and sieved at 325 mesh to obtain a carbon-containing powder of the electrode material.

Comparative Example 18

The phenolic resin (100 mesh) was pressed under a pressure of 20 MPa, the obtained material was heated to 150 °C for heating and curing, held for 2h, and cooled, the obtained material was transferred to a box furnace, heated to 450 °C in a nitrogen atmosphere for pre-carbonization, held for 24h, cooled, crushed, and air-pulverized to a median particle size of about 5.0 μm to obtain a crushed material.

The crushed material, hydrochloric acid (with a concentration of 31 wt%), hydrofluoric acid (with a concentration of 55 wt%) and pure water were mixed according to a mass ratio of 1: 0.8: 0.15: 3, heated to 60 °C, stirred for 24h, solid-liquid separated, washed to a pH value of 4, dried, placed in a tube furnace, heated to 1300 °C in a nitrogen atmosphere for high-temperature sintering, kept at the temperature of 4h, cooled, VC dispersed, and sieved at 325 mesh to obtain a carbon-containing powder of the electrode material.

The test methods of the present invention are as follows:

(1) Powder Compaction Density (g/cm$^3$):
The test method was as follows: the powder compaction density test instrument UTM7305 for the powder of Shenzhen suns technology company was used for testing.

A sample of a specified mass was placed in a mold and subjected to a pressure of 3T, and the pressure was kept for 30S respectively and then depressurized to 20N to test its thickness, and the compacted density (unit g/cm$^3$) was automatically output on the software of the instrument according to the formula $\rho = 10 \times (m/S \times H)$.

(2) Powder Conductivity Test:

The test method was as follows: the conductivity of the powder was tested by a Mitsubishi chemical MCP-PD51 tester, and the sample was added and tested at 20KN to obtain conductivity data (unit S/cm).

(3) Test of Median Particle Size:

Test method: MASTERSIZER3000 was used for testing.
The refractive index of the particles is 2.42, the absorption rate is 1.0, the dispersant is water, and the refractive index of the dispersant is 1.33.
The method was as follows: about 0.1 g of sample was weighed into a 100 mL beaker, water was added to 50 mL, ultrasonic treatment was performed for 1 min, the sample was added until the shading degree was 8-12%, and internal ultrasonic test was conducted.

(4) Carbon Layer Spacing Content Test:

The test method is as follows: using a Panalytical X'Pert PRO MPD tester, using Kα rays (wavelength λ = 0.1541 nm) of a Cu target as a light source, in a range of 2 Theta 10°-90°, and testing to obtain XRD data.
The carbon layer spacing was calculated by substituting the diffraction angle of (002) of XRD into the Scherrer formula (unit nm).

(5) Specific Surface Area Test:

The test method was as follows: the specific surface area was obtained by nitrogen adsorption test at 77K using a Macbeth chart tester (model ASAP2460), and the specific surface area was calculated by the BET formula (unit m$^2$/g).

(6) SEM Photograph Hard Carbon Test:

The test method was as follows: the sample was scanned by Hitachi S4800 scanning electron microscope to obtain an SEM image.

(7) True Density and Closed Hole Volume Test:

True density was tested according to a gas (helium) expansion displacement method by using a Beld3 H-2000TD true density meter: a sample cell was weighed to obtain a sample with a volume of about 3/4, and replaced with helium for 30 times, and then a true density value was measured by using helium.

The closed pore volume ($cm^3/g$) is obtained by theoretical calculation, and the formula is:

$$\text{Closed pore volume} = (1/\rho - 1/\rho_{\text{ref}})$$

where $\rho$ is the true density of the sample ($g/cm^3$) and $\rho_{\text{ref}}$ is the true density of the reference sample ($g/cm^3$).

It is generally considered that the graphite material is a non-porous carbon material, so artificial graphite (D50=8 $\mu$m) is used as a reference, and $\rho_{\text{ref}}$=2.25 $cm^3/g$.

In the formula, the physical meaning of $\rho_{\text{ref}}$ is the density of the carbon matrix in the non-pore region of the sample.

Therefore, the physical meaning of "closed pore volume" is the pore volume value ($cm^3/g$) of the "closed pore" contained in the 1g sample.

(8) Tests of Specific Capacity and initial efficiency:

The carbon-containing powder, a conductive agent and a binder obtained in Examples and Comparative Examples were mixed according to a mass percentage of 91: 3: 6, the mixture was adjusted with deionized water to a solid content of 50%, the mixture was coated on one side on a copper foil current collector, dried at 130 °C for 2h, rolled, until an areal density of 5.5±0.5 $mg/cm^2$, and cut into a disc with a diameter of 14 mm to obtain an electrode plate; a glass fiber GD-120 was used as a separator, a sodium disc with a diameter of 16 mm was used as a counter electrode, 1M NaPF6 in DIGLYME = 100 V% (NP005) was used as an electrolyte, and a CR2032 battery shell was assembled into a button battery.

At room temperature (about 25 °C), the button battery was tested on an Arbin battery test system, the nominal specific capacity was set to 300 mAh/g, the battery was discharged to 1 mV at a constant current of 0.1C, then discharged to a current density of 3.5 × 10-6A at a constant voltage of 1 mV, and the discharge was stopped; after standing, the battery was charged at 0.1C, and the cut-off voltage was 2V. The specific capacity (mAh/g) is the first charge capacity divided by the weight of the electrode material contained in the negative electrode plate, and the initial efficiency is the ratio of the first charge capacity to the first discharge capacity.

(9) Tests of Rate Charge Performance and Room Temperature Cycle Performance:

Bettley layered oxide BNH-O3A was used as a positive electrode, the mixture was mixed according to a mass percentage of a positive electrode material: a conductive agent: a binder at a mass ratio of 96%: 2%: 2%, the mixture was adjusted to a solid content of 50% with N-methylpyrrolidone, and the mixture was coated on both sides on an aluminum foil current collector, dried, rolled, and the surface density was controlled to be 300 $g/m^2$ to obtain a positive electrode plate.

The carbon-containing powder, the conductive agent and the binder obtained in Examples and Comparative Examples were mixed according to a mass percentage of 91: 3: 6, the mixture was adjusted to a solid content of 50% with deionized water, both sides were coated on a copper foil current collector, drying and rolling were performed, and a surface density was 150 $g/m^2$ to obtain a negative electrode plate;

The positive and negative electrodes were assembled into a 554065-type soft pack battery according to NP excess ratio of 20%, PP separator, 1M NaPF6 in EC: DMC: EMC=1: 1: 1 (volume ratio) as electrolyte, and the test voltage range was 2V-4V.

Test of charge retention rate (%) at a rate of 6C/0.2C: at room temperature, constant current charge and discharge tests were performed at different rates of 0.2C/0.2C and 6C/6C, respectively, and the charge retention rate at a rate of 6C/0.2C was obtained by dividing the charge capacity of 6C by the charge capacity of 0.2C;

Test of 1C/1C@400 weeks retention rate (%): at room temperature, a 1C/1C constant current charge and discharge cycle test was used, and the discharge capacity of the 400th week was divided by the discharge capacity of the first week to obtain a 1C/1C cycle retention rate of 400 weeks.

(10) Test of the mass percentage of nitrogen:

The test was carried out by using the German Altex nitrogen and hydrogen element analyzer ONH-2000, a certain mass sample and a flux (nickel foil) were added into a graphite crucible together, an analysis power was set to 4.4KW, helium was used as a carrier gas, the pressure of the carrier gas was adjusted to 0.2-0.4 MPA, the pressure of the power gas was adjusted to 0.4-0.6 MPa, after being energized, the sample was heated and melted, $N_2$ was released, and the $N_2$ was measured by a thermal conductivity cell, thereby automatically outputting the mass percentage of nitrogen element.

Table 1

| carbon-containing powder | median particle size ($\mu$m) | mass percentage of nitrogen (%) | powder compaction density (g/cm$^3$) | specific surface area (m$^2$/g) | carbon layer spacing (nm) | powder conductivity (S/cm) | true density (g/cc) | closed pore volume (cm$^3$/g) |
|---|---|---|---|---|---|---|---|---|
| Example 1 | 5.12 | 0.651 | 1.043 | 4.56 | 0.382 | 38.3 | 2.01 | 0.053 |
| Example 2 | 3.34 | 0.528 | 0.965 | 4.12 | 0.378 | 40.8 | 1.95 | 0.068 |
| Example 3 | 14.95 | 0.834 | 1.042 | 2.43 | 0.386 | 36.1 | 2.09 | 0.034 |
| Example 4 | 8.12 | 0.225 | 0.961 | 3.25 | 0.373 | 39.2 | 1.98 | 0.061 |
| Example 5 | 5.89 | 0.635 | 1.002 | 8.35 | 0.376 | 40.6 | 2.05 | 0.043 |
| Comparative Example 1 | 5.32 | 0.103 | 0.913 | 10.23 | 0.371 | 32.3 | 1.86 | 0.093 |
| Comparative Example 2 | 5.14 | 0.941 | 0.855 | 12.69 | 0.379 | 33.2 | 1.81 | 0.108 |
| Comparative Example 3 | 4.92 | 0.189 | 0.925 | 11.04 | 0.374 | 33.6 | 1.79 | 0.114 |
| Comparative Example 4 | 5.41 | 0.114 | 0.918 | 11.31 | 0.373 | 34.8 | 1.76 | 0.124 |
| Comparative Example 5 | 5.08 | 0.723 | 0.908 | 10.82 | 0.381 | 32.5 | 1.83 | 0.102 |
| Comparative Example 6 | 5.15 | 0.065 | 0.948 | 5.85 | 0.372 | 34.9 | 1.89 | 0.085 |
| Comparative Example 7 | 5.19 | 0.451 | 0.937 | 11.79 | 0.377 | 35.1 | 1.82 | 0.105 |
| Comparative Example 8 | 5.34 | 0.612 | 0.948 | 13.12 | 0.374 | 31.5 | 1.85 | 0.096 |
| Comparative Example 9 | 5.38 | 0.674 | 0.884 | 31.45 | 0.378 | 30.9 | 1.88 | 0.087 |
| Comparative Example 10 | 5.25 | 0.425 | 0.921 | 5.84 | 0.375 | 42.3 | 2.12 | 0.027 |
| Comparative Example 11 | 5.18 | 0.686 | 1.043 | 3.83 | 0.382 | 42.8 | 2.15 | 0.021 |
| Comparative Example 12 | 5.11 | 0.608 | 0.848 | 23.45 | 0.379 | 32.5 | 1.76 | 0.124 |

(continued)

| carbon-containing powder | median particle size (μm) | mass percentage of nitrogen (%) | powder compaction density (g/cm$^3$) | specific surface area (m$^2$/g) | carbon layer spacing (nm) | powder conductivity (S/cm) | true density (g/cc) | closed pore volume (cm$^3$/g) |
|---|---|---|---|---|---|---|---|---|
| Comparative Example 13 | 5.16 | 0.561 | 0.889 | 15.68 | 0.382 | 30.8 | 1.84 | 0.099 |
| Comparative Example 14 | 5.26 | 0.588 | 1.032 | 4.62 | 0.378 | 39.5 | 2.11 | 0.029 |
| Comparative Example 15 | 5.43 | 0.796 | 1.035 | 15.63 | 0.383 | 29.2 | 2.15 | 0.021 |
| Comparative Example 16 | 4.88 | 0.106 | 0.944 | 4.34 | 0.369 | 44.5 | 1.75 | 0.127 |
| Comparative Example 17 | 4.99 | 0.001 | 0.891 | 11.24 | 0.384 | 34.5 | 1.91 | 0.079 |
| Comparative Example 18 | 4.85 | 0.022 | 0.932 | 10.83 | 0.375 | 32.4 | 2.18 | 0.014 |

Table 2

| carbon-containing powder | specific capacity (mAh/g) | initial efficiency (%) | 6C/0.2C charge capacity retention (%) | 1C/1C@400 weeks retention (%) |
|---|---|---|---|---|
| Example 1 | 355.7 | 93.7 | 92.9 | 97.7 |
| Example 2 | 387.5 | 94.2 | 90.2 | 95.4 |
| Example 3 | 348.6 | 93.1 | 92.5 | 98.1 |
| Example 4 | 341.9 | 93.2 | 93.1 | 92.8 |
| Example 5 | 338.5 | 92.7 | 90.4 | 95.2 |
| Comparative Example 1 | 290.1 | 89.2 | 81.3 | 78.8 |
| Comparative Example 2 | 309.7 | 78.6 | 83.5 | 81.3 |
| Comparative Example 3 | 301.9 | 89.4 | 85.2 | 82.4 |
| Comparative Example 4 | 290.3 | 88.2 | 82.6 | 85.7 |
| Comparative Example 5 | 288.6 | 92.4 | 86.2 | 83.6 |
| Comparative Example 6 | 323.1 | 92.1 | 69.9 | 82.4 |
| Comparative Example 7 | 302.3 | 92.5 | 79.1 | 80.5 |
| Comparative Example 8 | 296.5 | 93.2 | 74.1 | 64.8 |
| Comparative Example 9 | 285.7 | 88.9 | 84.5 | 85.1 |
| Comparative Example 10 | 301.2 | 91.9 | 91.5 | 92.6 |
| Comparative Example 11 | 312.6 | 92.6 | 90.8 | 93.1 |
| Comparative Example 12 | 274.1 | 89.2 | 81.6 | 82.9 |
| Comparative Example 13 | 312.9 | 89.4 | 81.9 | 82.8 |
| Comparative Example 14 | 313.1 | 93.1 | 91.2 | 93.7 |

(continued)

| carbon-containing powder | specific capacity (mAh/g ) | initial efficien cy (%) | 6C/0.2C charge capacity retention (%) | 1C/1C@40 0 weeks retention (%) |
|---|---|---|---|---|
| Comparative Example 15 | 285.2 | 87.4 | 84.5 | 83.9 |
| Comparative Example 16 | 312.4 | 94.1 | 68.3 | 65.2 |
| Comparative Example 17 | 259.7 | 91.4 | 90.9 | 95.6 |
| Comparative Example 18 | 284.1 | 92.1 | 59.7 | 80.7 |

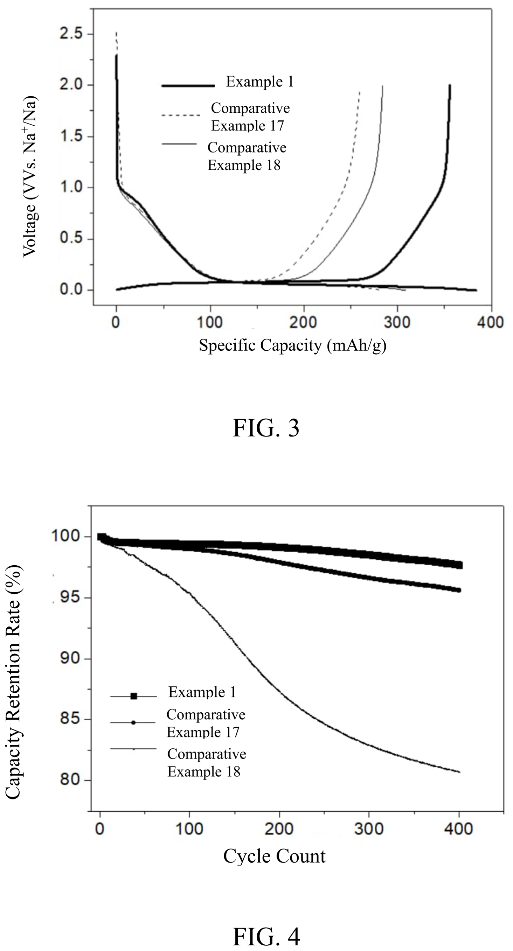

As shown in Table 1, Table 2, FIG. 2, FIG. 3 and FIG. 4, the powder compaction density of the carbon-containing powder of Example 1 to Example 5 is within the range of 0.965 $g/cm^3$-1.043 $g/cm^3$, the specific capacity of the sodium-ion battery is within the range of 338.5 mAh/g to 387.5 mAh/g, the initial efficiency is 92.7%-94.2%, the charge capacity retention rate is 90.2%-93.1%, and the cycle retention rate of 1C/1C@400 weeks at room temperature ranges from 92.8% to 98.1%, indicating that the carbon-containing powder provided by the present invention has the advantages of high compaction density, high capacity, high initial efficiency, high rate and long cycle.

This is because in the present invention, the plant carbon source is modified and then compounded with the polymer carbon source or the saccharide carbon source into a composite carbon source, the composite carbon source has the characteristics of sufficient crosslinking and high density of carbon source molecules, uniform shrinkage during pre-carbonization, inhibition of the generation of "pores", reduction of pore volume, increased density performance, stereo crosslinking between graphite crystallites, low internal diffusion resistance of sodium ions in the material particles, and good kinetic performance, thereby obtaining a hard carbon negative electrode material with high compaction density, fast charging and long life. Moreover, the first carbon source (plant carbon source) is subjected to the first oxidation treatment and the first reduction treatment to obtain the first carbon source modified with the nitrogen-containing cross-linking reaction group ($-NH_2$, -NH-), and then compounded with the second carbon source (organic polymer or saccharide carbon source) to obtain the nitrogen-containing composite carbon source, deriving to obtain the nitrogen-doped hard carbon, which improves the conductivity and wettability of the hard carbon electrode, improves the kinetic performance thereof, and improves the capacity performance.

In addition, plant-based carbon source pre-carbonized material has high crystalline carbon content, less amorphous carbon, and the polymer-based carbon source pre-carbonized material has less crystalline carbon and more amorphous carbon; the composite carbon source pre-carbonized material of the present invention has the characteristics of crystalline carbon, moderate amorphous carbon content ratio, and uniform distribution of amorphous carbon between crystallized carbon. The sp3 hybrid carbon atom content of amorphous carbon is high, the chemical bond energy is small, and it is easy to break; the sp2 hybrid carbon atom content of crystalline carbon is high, the chemical bond energy is large, and it is difficult to break. Therefore, in the present invention, the amorphous carbon is directionally etched after the composite carbon source pre-carbonized material is modified by the second oxidation treatment, and the obtained second precursor has a large number of pores (pores communicating with the interface), a small pore size, and uniform pore distribution. After high-temperature sintering, open pores are converted into closed pores with a large number, small pore volume and uniform distribution, which contributes to the high capacity characteristics without sacrificing the compaction density.

By analyzing Example 1, Comparative Example 1, Comparative Example 3, Comparative Example 4, Comparative Example 17, and Comparative Example 18, it can be seen that the first oxidation treatment and the first reduction treatment on the first carbon source can improve the nitrogen content of the carbon-containing powder, the powder compaction density, the powder conductivity, and the true density, and reduce the specific surface area, thereby indicating that the first oxidation treatment and the first reduction treatment can improve the molecular cross-linking degree of the composite carbon source, promote the uniform shrinkage of the carbon matrix in the pre-carbonization phase, inhibit the generation of "pores", and improve the compaction density, the powder conductivity, and the true density. Moreover, the three-dimensional cross-linking between the graphite crystallites can be improved, which is conducive to the diffusion of sodium ions inside the particles and has good kinetic performance. The nitrogen-containing group was introduced into the composite carbon source by the first oxidation treatment and the first reduction treatment, which provides a basis for doping nitrogen into the obtained carbon-containing powder, and further improves the capacity and kinetic performance of the carbon-containing powder. The first oxidation treatement and the first reduction treatment improve the molecular crosslinking degree of the composite carbon source, so that the two types of carbon sources are not separated during heating and curing and pre-carbonization, thereby ensuring that the composite carbon source pre-carbonized material has the characteristics of crystallized carbon, moderate content ratio of amorphous carbon, and uniform distribution of amorphous carbon among crystallized carbon, and providing a basis for the subsequent second oxidation directional etching of amorphous carbon to obtain closed pores with large number, small pore volume, and uniform distribution, which is beneficial to improving the capacity performance.

By analyzing Example 1, Comparative Example 5, and Comparative Example 6, it can be seen that controlling the reasonable mass ratio between the modified carbon source and the second carbon source can improve the powder compaction density, powder conductivity, and true density of the carbon-containing powder, reduce the closed pore volume, and improve the capacity, rate, and cycle performance of the electrode material. This is because, if the mass ratio of the second carbon source is too high or too low, the second carbon source cannot fully diffuse to the molecular gap of the modified carbon source and undergo a sufficient crosslinking reaction with the modified carbon source after pressing and heating and curing. Therefore, the molecular crosslinking degree of the obtained composite carbon source is low enough, the shrinkage is uneven during the pre-carbonization process, the generation of "pores" cannot be suppressed, the compaction density, powder conductivity and true density of the carbon-containing powder are reduced. At the same time, the low degree of molecular crosslinking of the composite carbon source will lead to the low degree of graphite crystallite crosslinking of the obtained carbon-containing powder, the high diffusion resistance of sodium ions inside the particles, and the reduction of kinetic performance, so the rate and cycle performance are both reduced. If the mass ratio of the second carbon source is too high or too low, the composite carbon source pre-carbonized material has a high or low content ratio of crystalline carbon and amorphous carbon, and after the second oxidation treatment is subjected to directional etching, closed pores with a large number, small pore volume and uniform distribution cannot be obtained, resulting in a decrease in capacity performance.

By analyzing Example 1, Comparative Example 7, and Comparative Example 8, it can be seen that controlling the curing temperature within a reasonable range can improve the powder compaction density, powder conductivity, and true density of the carbon-containing powder, reduce the closed pore volume, and facilitate to improve the capacity, rate, and cycle performance of the electrode material. This is because the temperature of the heating and curing affects the degree and uniformity of the chemical crosslinking reaction between the modified carbon source and the second carbon source molecules in the heating and curing stage. If the temperature of the curing is too low, the "chemical crosslinking reaction" is insufficient, the first carbon source and the second carbon source in the composite carbon source are separated, the uneven shrinkage of the carbon matrix cannot be effectively inhibited during pre-carbonization, and the generation of "pores" cannot be inhibited; if the temperature of the curing is too high, the uniformity of the reaction is poor, the matrix does not shrink uniformly, and the generation of "pores" cannot be inhibited. Therefore, if the curing temperature is too high or too low, the density performance is reduced, and the powder compaction density, powder conductivity and true density are reduced. As a result, the graphite crystallite crosslinking degree of the obtained carbon-containing powder is low, the internal diffusion resistance of sodium ions inside the particles of the electrode material is high, and the kinetic performance is reduced, so the rate and cycle performance are reduced. If the curing temperature is too high or too low, the content distribution of crystallized carbon and amorphous carbon in the pre-carbonized material particles of the composite carbon source is uneven, resulting in a locally high amorphous carbon content, and after performing the second oxidation treatment, larger pores are generated in the amorphous carbon concentrated region, and it is difficult to form closed pores by sintering some pores with large pore diameters, resulting in a decrease in capacity performance.

By analyzing Example 1, Comparative Example 2, Comparative Example 9, and Comparative Example 10, it can be seen that controlling the pre-carbonization temperature within a reasonable range can improve the powder compaction density of the carbon-containing powder, which is conducive to improving the capacity, rate, and cycle performance of the electrode material. This is because the mass concentration of the first oxidant is too high, and the degree of oxidation is too high, which will lead to porosification of the modified carbon source, thereby resulting in loose porosity of the pre-carbonized material. If the pre-carbonization temperature is too low, the pre-carbonized material will be loose and porous, and will be significantly etched after the second oxidation, and some pores are difficult to be converted into closed pores, resulting in a decrease in the compaction density of the obtained carbon-containing powder, a decrease in the powder conductivity, an increase in the specific surface area, and a decrease in the dynamic performance, and thus a decrease in the rate and cycle performance. If the pre-carbonization temperature is too high, the texture of the pre-carbonized material will be too dense, which is not conducive to the directional etching of the amorphous carbon in the second oxidation treatment and improves the capacity failure.

By analyzing Example 1, Comparative Example 11, Comparative Example 12, Comparative Example 13, and Comparative Example 14, it can be seen that controlling the degree of the first oxidation treatment, the temperature of the second oxidation treatment, and the volume proportion of the oxidizing gas in the second oxidation treatment within a reasonable range is conducive to improving the powder compaction density of the carbon-containing powder and improving the capacity performance of the electrode material. This is because the temperature of the second oxidation treatment is relatively low or the proportion of the oxidizing gas in the second oxidation treatment is relatively low, which will lead to the weakening of the effect of etching of amorphous carbon in the second oxidation treatment, the obtained second precursor has a reduced number of pores (pores communicating with the interface) with small pore size and uniform pore distribution, after high-temperature sintering, the pore volume converted from the pores is small, the number of uniformly distributed closed pores is reduced, and the capacity is reduced; the temperature of the second oxidation treatment is relatively high or the proportion of the oxidizing gas in the second oxidation treatment gas is relatively high, which will lead to the over-etching of the pre-carbonized material, the carbon matrix forms pores with large pore size, large pore volume, and non-uniform distribution, part of the open pores are converted into closed pores through high-temperature sintering, the utilization rate of sodium storage accumulated in these closed pores is low (sodium is filled on the surface of the pore wall, and there is no sodium storage activity in the central region of the pore), resulting in no increase and decrease in the capacity performance, and part of the open pores are still open pores after high-temperature sintering, which will lead to the increase of the specific surface area, the increase of defect sites, and the increase of side reactions, thus resulting in the decrease of powder compaction density and capacity, rate and cycle performance.

By analyzing Example 1, Comparative Example 15 and Comparative Example 16, it can be seen that controlling the sintering temperature within a reasonable range facilitates to improve the capacity, rate and cycle performance of the carbon-containing powder. This is because, when the sintering temperature is too low, the pores of the second precursor are insufficient to form closed pores, the volume of the closed pores of the obtained carbon-containing powder is low, the sodium storage capacity of the pores is low, and if the sintering temperature is too low, the conductivity of the powder is low, the polarization of the carbon-containing powder is large, and the rate and cycle performance are reduced. If the sintering temperature is too high, the layer spacing between the carbon layers of the hard carbon decreases, the sodium storage sites between the carbon layers are reduced, resulting in the reduction of the sodium storage capacity between the carbon layers, the volume of the closed pores and the size of the pores are increased, but the utilization rate of sodium storage accumulated in the closed pores is low (sodium is filled on the surface of the pore walls, and there is no sodium storage activity in the central region of the pores), the sodium storage capacity of the pores is reduced, and thus the capacity performance is reduced. As the layer spacing between the carbon layers decreases, the steric hindrance of sodium ion diffusion within the carbon-containing powder increases significantly, and the rate and cycle performance decrease.

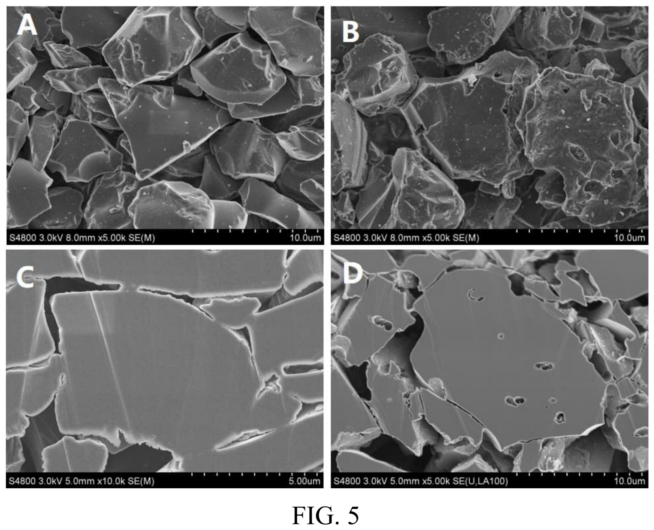

By analyzing Example 1, Comparative Example 17 and Comparative Example 18, it can be seen that the sintering temperature is controlled within a reasonable range, and compared with the hard carbon derived from a single first carbon source or hard carbon derived from a single second carbon source, the carbon-containing powder obtained in the present invention has significant advantages in terms of powder compaction density, capacity, rate and cycle performance. This is because, according to the advantages and disadvantages of preparing hard carbon based on plant-based hard carbon and polymer (organic polymer or saccharide) carbon sources in the present invention, the two are compounded and shortened, supplemented with nitrogen doping and oxidation modification, and the hard carbon negative electrode material with high capacity, high compaction, fast charging and long life performance is prepared. A single first carbon source-derived hard carbon or a single second carbon source-derived hard carbon cannot achieve the technical effects of the present invention. As shown in FIG. 2, FIG.3 and FIG. 4, the carbon-containing powder provided by the present disclosure has better capacity, rate and cycle performance than the carbon-containing powder directly prepared from a single carbon source. As shown in FIG. 5, there are no "pores" on the surface and inside of the carbon-containing powder provided by the present invention, while there are "pores" on the surface and inside of the carbon-containing powder of Comparative Example 17, and the powder compaction density of the present invention is higher than that of Comparative Example 17. Therefore, the composite carbon source has the characteristics of sufficient crosslinking and high density of carbon source molecules, and uniform shrinkage during pre-carbonization, which can inhibit the generation of "pores" and reduce the pore volume.

The technical proposals provided by the embodiments of the present invention are described in detail above, specific examples are used herein to illustrate the principles and implementations of the present application, and the description of the above embodiments is only used to help understand the method and core idea of the present application; at the same time, for those skilled in the art, according to the idea of the present invention, there will be changes in the specific implementations and application scope, and in summary, the content of the present specification should not be construed as limiting the present invention.

**Claims**

1. An electrode material, applied to a sodium ion battery, **characterized in that** the electrode material comprises a carbon-containing powder;
   wherein a conductivity of the carbon-containing powder ranges from 36 S/cm to 41 S/cm; a mass percentage of nitrogen in the carbon-containing powder ranges from 0.2 wt% to 0.9 wt%; and a closed pore volume of the carbon-containing powder ranges from 0.03 $cm^3/g$ to 0.07 $cm^3/g$.

2. The electrode material according to claim 1, **characterized in that** the mass percentage of nitrogen in the carbon-containing powder ranges from 0.4 wt% to 0.7 wt%.

3. The electrode material according to claim 1 or 2, **characterized in that** a compaction density of the carbon-containing powder ranges from 0.95 $g/cm^3$ to 1.05 $g/cm^3$; and/or,

a carbon layer spacing of the electrode material ranges from 0.37 nm to 0.39 nm; and/or,
a median particle size of the carbon-containing powder ranges from 3 $\mu$m to 15 $\mu$m; and/or,
a specific surface area of the carbon-containing powder ranges from 2.0 m$^2$/g to 10.0m$^2$/g.

4. A method for preparing an electrode material, **characterized in that** the method comprises:

modifying a first carbon source to obtain a modified carbon source;
mixing the modified carbon source with a second carbon source and then performing pretreatment to obtain a first precursor;
oxidizing the first precursor to obtain a second precursor;
sintering the second precursor to obtain a carbon-containing powder;
wherein a conductivity of the carbon-containing powder ranges from 36 S/cm to 41 S/cm; a mass percentage of nitrogen in the carbon-containing powder ranges from 0.2 wt% to 0.9 wt%; and a closed pore volume of the carbon-containing powder ranges from 0.03 cm$^3$/g to 0.07 cm$^3$/g.

5. The method according to claim 4, **characterized in that** the first carbon source comprises a plant carbon source; and/or,
the second carbon source comprises a carbon source having a melting point and/or a softening point.

6. The preparation method according to claim 4, **characterized in that** the modifying the first carbon source to obtain the modified carbon source comprises:

performing a first oxidation treatment on the first carbon source to obtain a first oxidation product; and
performing a first reduction treatment on the first oxidation product to obtain the modified carbon source.

7. The method according to claim 6, **characterized in that** a first oxidant for the first oxidation treatment is selected from at least one of nitric acid or an acid solution of nitrate; the acid solution of nitrate is obtained by dissolving nitrate in an acid solution; the nitrate comprises at least one of sodium nitrate, potassium nitrate, magnesium nitrate, zinc nitrate, iron nitrate, cobalt nitrate, cadmium nitrate, ammonium nitrate, calcium nitrate, lead nitrate, or cerium nitrate; the acid solution comprises one or a combination of at least two of hydrochloric acid, hydrofluoric acid, phosphoric acid, and sulfuric acid; and/or,

an oxidation temperature of the first oxidation treatment ranges from 60 °C to 80 °C; and/or,
an oxidation time of the first oxidation treatment ranges from 3h to 24h; and/or,
a mass concentration of the nitric acid is 0.5 wt% to 5.0 wt%; a mass proportion of the nitrate in the acid solution of the nitrate is 0.5 wt% to 5.0 wt%; and a ratio of mass of the first carbon source to solution mass of the first oxidant ranges from 2 to 20; and/or,
a first reductant for the first reduction treatment is selected from at least one of formic acid, ammonium formate, hydrazine hydrate, sodium sulfide, or sodium thiosulfate; and/or,
a first catalyst for the first reduction treatment is selected from soluble salts of transition metal elements; and/or,
a reduction temperature of the first reduction treatment ranges from 60 °C to 80 °C; and/or,
a reduction time of the first reduction treatment ranges from 3h to 10h; and/or,
a mass ratio of the first oxidation product, the first reductant, the first catalyst, to a solvent ranges from 1: (0.3-3): (0.1-0.2): (1.5-10); and/or,
the solvent is selected from at least one of tetrahydrofuran, ethanol, benzene, isopropanol or pure water.

8. The method according to claim 6, **characterized in that** the modifying the first carbon source to obtain the modified carbon source further comprises:

centrifuging or suction filtering a product of the first oxidation treatment, performing washing to a first pH value, and then performing drying; and/or,
centrifuging or suction filtering a product of the first reduction treatment, performing washing to a second pH value, and then performing drying;
wherein the first pH value ranges from 3 to 7, and the second pH value ranges from 3 to 7.

9. The method according to claim 4, **characterized in that** the mixing the modified carbon source with the second carbon source and then performing pretreatment to obtain the first precursor comprises:

mixing the modified carbon source with the second carbon source, and then performing heating and curing to obtain a cured product; and

pre-carbonizing the cured product to obtain the first precursor.

10. The method according to claim 9, **characterized in that** a heating temperature of the heating and curing ranges from 100 °C to 300 °C; and/or,

a heating time of the heating and curing ranges from 0.5h to 24h; and/or,
a heating temperature of the pre-carbonizing ranges from 450 °C to 650 °C; and/or,
a heating time of the pre-carbonizing ranges from 0.5h to 24h; and/or,
an atmosphere of the pre-carbonizing is an inert atmosphere or an oxygen-poor atmosphere; and/or,
the inert atmosphere is selected from at least one of a nitrogen atmosphere, an argon atmosphere, a neon atmosphere, a helium atmosphere, a xenon atmosphere, or a krypton atmosphere; and/or,
the oxygen-poor atmosphere is a gas atmosphere with an oxygen content of less than or equal to 1 wt%.

11. The method according to claim 9, **characterized in that** the mixing the modified carbon source with the second carbon source and then performing pretreatment to obtain the first precursor further comprises:

after mixing the modified carbon source with the second carbon source and before heating and curing, pressing the mixture of the modified carbon source and the second carbon source;
a mass ratio of the modified carbon source to the second carbon source is 1: (0.3-3.0);
crushing and sieving a product of the pre-carbonizing;
a crushing device for the crushing is selected from at least one of a preparation ball mill, an airflow pulverizer, a mechanical pulverizer, or a rolling mill; and/or,
a median particle size of the crushing ranges from 3 $\mu$m to 15 $\mu$m; and/or,
a sieve mesh number of the sieving ranges from 30 mesh to 325 mesh; and/or,
a pressing pressure of the pressing ranges from 10 MPa to 20 MPa.

12. The method according to claim 11, **characterized in that** the mixing the modified carbon source with the second carbon source and then performing pretreatment to obtain the first precursor further comprises:

performing a purification treatment after the crushing;
the purification treatment comprises:

mixing a product of the crushing with an acid solution and pure water in a mass ratio of 1: (0.1-1): (1.5-10), performing stirring for a preset time, and then performing a solid-liquid separation to obtain a solid product;
washing the solid product to a third pH value;
wherein the acid solution is an aqueous solution selected from at least one of hydrochloric acid, hydrofluoric acid, nitric acid, phosphoric acid, or sulfuric acid; and the third pH value ranges from 2.5 to 4.5.

13. The method according to claim 4, **characterized in that** the oxidizing the first precursor to obtain the second precursor comprises:

performing a second oxidation treatment on the first precursor;
an atmosphere of the second oxidation treatment is an oxidizing atmosphere, the oxidizing atmosphere comprises a carrier gas and an oxidizing gas, the carrier gas is selected from any one or a combination of at least two of a nitrogen, an argon, a neon, a helium, a xenon or a krypton; the oxidizing gas is selected from at least one of an oxygen, an ozone, an air or a carbon dioxide, and a volume content of the oxidizing gas in the oxidizing atmosphere ranges from 5 %VOL to 30 %VOL;
a temperature for the second oxidation treatment ranges from 500 °C to 800 °C; and a holding time for the second oxidation treatment ranges from 1h to10h.

14. The method according to claim 4, **characterized in that** in the step of sintering the second precursor to obtain the carbon-containing powder, a sintering temperature ranges from 1200 °C to 1500 °C; a sintering time ranges from 0.5h to 24h; a sintering atmosphere is an inert atmosphere, and the inert atmosphere is selected from at least one of a nitrogen atmosphere, an argon atmosphere, a neon atmosphere, a helium atmosphere, a xenon atmosphere, or a krypton atmosphere.

**15.** An electrode, **characterized in that** the electrode comprises the electrode material according to any one of claims 1-3 or the electrode material prepared by the preparation method according to any one of claims 4-14.

**16.** A secondary battery, **characterized in that** the secondary battery comprises the electrode material according to any one of claims 1-3 or the electrode material prepared by the preparation method according to any one of claims 4-14 or the electrode according to claim 15.

| | |
|---|---|
| modifying a first carbon source to obtain a modified carbon source | S101 |

↓

| | |
|---|---|
| mixing the modified carbon source with a second carbon source and then performing pretreatment to obtain a first precursor | S102 |

↓

| | |
|---|---|
| oxidizing the first precursor to obtain a second precursor | S103 |

↓

| | |
|---|---|
| sintering the second precursor to obtain the carbon-containing powder | S104 |

FIG. 1

FIG. 2

FIG. 3

FIG. 4

FIG. 5

**EP 4 769 496 A1**

EUROPEAN SEARCH REPORT

| | Application Number |
|---|---|
| | EP 25 22 6337 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 352 727 A (SHENZHEN BTR NEW MATERIAL TECH CO LTD) 5 January 2024 (2024-01-05) | 1-3 | INV. H01M4/04 C01B32/05 |
| Y | * see family member WO 2025/091968 A1 * -& WO 2025/091968 A1 (SHENZHEN BTR SODIUM BATTERY NEW MATERIAL TECH CO LTD [CN]) 8 May 2025 (2025-05-08) * examples 2,4,11; tables 1,2 * ----- | 4-16 | H01M4/133 H01M4/1393 H01M4/36 H01M4/587 H01M10/054 |
| Y | CN 113 422 030 B (BTR NEW MAT GROUP CO LTD; JIXI BTR GRAPHITE IND PARK CO LTD) 30 August 2022 (2022-08-30) * paragraphs [0128] - [0132] * ----- | 4 | |
| Y | THOMPSON MATHEW ET AL: "A review on biomass-derived hard carbon materials for sodium-ion batteries", MATERIALS ADVANCES, vol. 2, no. 18, 20 September 2021 (2021-09-20), pages 5881-5905, XP093222216, ISSN: 2633-5409, DOI: 10.1039/D1MA00315A Retrieved from the Internet: URL:https://pubs.rsc.org/en/content/articl epdf/2021/ma/d1ma00315a> [retrieved on 2026-02-13] * pages 3,9,12,1 * ----- | 5-16 | |
| | | | TECHNICAL FIELDS SEARCHED (IPC) |
| | | | H01M C01B |
| A | CN 117 476 921 A (BTR NEW MAT GROUP CO LTD; HUIZHOU DINGYUAN NEW ENERGY TECH CO LTD) 30 January 2024 (2024-01-30) * paragraphs [0180], [0224] * ----- | 1-16 | |
| A | JP H04 37669 A (OJI PAPER CO) 7 February 1992 (1992-02-07) * pages 5,6 * ----- | 1-16 | |
| | -/-- | | |

The present search report has been drawn up for all claims

| Place of search | Date of completion of the search | Examiner |
|---|---|---|
| The Hague | 13 February 2026 | Golizadeh, Mehran |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

29

Europäisches
Patentamt

European
Patent Office

Office européen
des brevets

# EUROPEAN SEARCH REPORT

**Application Number**

EP 25 22 6337

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 115 911 320 A (SHENZHEN INST OF ADV TECH CAS) 4 April 2023 (2023-04-04) * page 63 * | 1-16 | |
| A | NITA CRISTINA ET AL: "Hard carbon derived from coconut shells, walnut shells, and corn silk biomass waste exhibiting high capacity for Na-ion batteries", JOURNAL OF ENERGY CHEMISTRY, ELSEVIER, AMSTERDAM, NL, vol. 58, 8 September 2020 (2020-09-08), pages 207-218, XP086536143, ISSN: 2095-4956, DOI: 10.1016/J.JECHEM.2020.08.065 [retrieved on 2020-09-08] * Section 3.1 * | 1-16 | |

**TECHNICAL FIELDS
SEARCHED      (IPC)**

The present search report has been drawn up for all claims

| Place of search | Date of completion of the search | Examiner |
|---|---|---|
| The Hague | 13 February 2026 | Golizadeh, Mehran |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 22 6337

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2026

| Patent document cited in search report | | Publication date | Patent family member(s) | | Publication date |
|---|---|---|---|---|---|
| CN 117352727 | A | 05-01-2024 | CN | 117352727 A | 05-01-2024 |
| | | | WO | 2025091968 A1 | 08-05-2025 |
| WO 2025091968 | A1 | 08-05-2025 | CN | 117352727 A | 05-01-2024 |
| | | | WO | 2025091968 A1 | 08-05-2025 |
| CN 113422030 | B | 30-08-2022 | NONE | | |
| CN 117476921 | A | 30-01-2024 | CN | 117476921 A | 30-01-2024 |
| | | | EP | 4664555 A1 | 17-12-2025 |
| | | | JP | 2026502436 A | 23-01-2026 |
| | | | KR | 20250105677 A | 08-07-2025 |
| | | | WO | 2025139203 A1 | 03-07-2025 |
| JP H0437669 | A | 07-02-1992 | NONE | | |
| CN 115911320 | A | 04-04-2023 | CN | 115911320 A | 04-04-2023 |
| | | | WO | 2024109849 A1 | 30-05-2024 |

EPO FORM P0459

For more details about this annex : see Official Journal of the European Patent Office, No. 12/82